# EUROPEAN PATENT APPLICATION

(11) **EP 1 064 844 A1**
(43) Date of publication of application: **03.01.2001**
(21) Application number: 00112189.6
(22) Date of filing: 07.06.2000
(51) Int. Cl.: A01N 25/30

(54) **Surfactant blends containing organosilicone surfactants and diphenyl oxide sulfonate surfactants useful as agricultural adjuvants**

(30) Priority: 30.06.1999 US 343504
(71) Applicant: DOW CORNING CORPORATION, Midland Michigan 48686-0994 (US)
(72) Inventor: Burow, Richard Frederick, Midland, Michigan 48642 (US); Wallick, David Edward, Midland, Michigan 48640 (US); Schulz, William James Jr., Midland, Michigan 48642 (US)
(74) Representative: Sternagel, Fleischer, Godemeyer & Partner Patentanwälte

(57) **Abstract**

A surfactant blend comprising an organosilicone surfactant and at least one diphenyloxide sulfonate surfactant useful as agricultural adjuvants is disclosed. The blends of this invention provide enhanced performance of certain herbicides such as glyphosate and glufosinate. Benefits include rainfastness and control of difficult weeds such as giant foxtail and velvetleaf beyond what can be achieved with conventional surfactants.

## Description

The present invention provides surfactant blends comprising organosilicone surfactants and alkyl diphenyloxide sulfonate surfactants useful as agricultural adjuvants. More particularly, our invention provides a surfactant blend comprising 5 to 55% by weight of an organosilicone surfactant and 45 to 95% by weight of an alkyl diphenyloxide sulfonate surfactant. Our surfactant blends provide enhanced performance of certain herbicides such as glyphosate and glufosinate. Benefits include rainfastness and control of difficult weeds such as giant foxtail and velvetleaf beyond what can be achieved with conventional surfactants.

Nonionic surfactant formulations are commonly used in forestry, agriculture and horticulture as agricultural adjuvants to improve the efficacy of agriculturally active ingredients such as herbicides, insecticides, micronutrients, biologicals, fungicides and growth regulators. Surfactants are often used as dispersants, wetting and spreading agents and emulsifiers in a formulated product or package or in a tank mix.

Nonionic surfactants are well known for their ability to reduce the surface tension of aqueous solutions. This reduction of surface tension is important for the spreading of solutions on difficult to wet surfaces such as the waxy surface of plant leaves. Surfactants can also aid in uptake. Although conventional surfactants aid in wetting of spray formulations, they do not provide total wetting on hydrophobic leaf surfaces.

Organosilicone compounds have been found to be significantly useful as agricultural adjuvants because of their unique wetting properties. These surfactants provide surface tension values significantly lower than conventional nonionic surfactants and can provide highly efficient uptake of agricultural chemicals into the plant. The spreading of aqueous solutions due to the organosilicone compounds gives total wetting as measured by low contact angle on leaf surfaces while conventional surfactants provide for less spreading as indicated by higher contact angles. In addition, the organosilicone compounds have been shown to increase the speed and amount of uptake of agricultural active ingredients into plants, resulting in enhanced efficacy of the agricultural active ingredients, including in some cases, rainfastness.

Blends of conventional surfactants and organosilicone surfactants which are useful as agricultural adjuvants have been disclosed. However, in aqueous mixtures of organosilicones with conventional organic surfactants such as nonyl phenol ethoxylates, the organic components are known to interfere with the spreading performance of the organosilicone surfactant. For example, Policello in U.S. Patent 5,104,647 discloses a surfactant blend for use as a pesticide adjuvant comprising (a) 1 to 99 weight percent of an organosilicone surfactant containing oxyalkylene groups and (b) 1 to 99 weight percent of a polyalkyleneoxide copolymer having the formula R*"*O-(C₂H₄O)_{c}(C₃H₆O)_{d}-R*"* wherein c is 0 to 300, d is 1 to 300 and R*"* is hydrogen or an alkyl group having 1 to 4 carbon atoms, and wherein the organosilicone surfactant is soluble in the polyalkyleneoxide copolymer. Policello et al. in U.S. Patent 5,558,806 discloses a surfactant blend comprising (a) 1 to 99% by weight of a polyalkyleneoxide polysiloxane arid (b) 1 to 99% by weight of an organic compound having the formula CH₃(CH2)_{c}((R³)₂C)_{d}OₜR⁴ wherein R³ is the same or different and is selected from hydrogen and an alkyl having 1 to 4 carbon atoms, c has a value of 5 to 9, d has a value of 0 to 4, c+d has a value of 5 to 9 and t is 0 or 1, R⁴ is a nonionic hydrophilic moiety with the proviso that when t is 0, R⁴ is 2-pyrrolidon-1-yl (C₄H₆NO), and when t is 1, R⁴ is selected from (i) (C₂H₄O)_{f}(C₃H₆O)_{g}H and (ii) (C₆H₉O₅)ₕ-C₆H₁₀O₅ wherein f has a value of 1 to 40, g has a value of 0 to 40 and h has a value of 1 to 4 wherein component (b) does not interfere with the spreading ability of component (a). The surfactant blend is disclosed by Policello et al. as being useful as an adjuvant in pesticide sprays or crop oil concentrates.

PCT WO 97/23281 discloses a surfactant blend providing improved superspreading characteristics comprising (a) from 70% to 95% of an organosilicone compound containing oxyalkylene groups and (b) from 30% to 5% of non-silicone containing surfactants wherein the hydrophobic group or groups of the surfactant each independently comprises an aliphatic moiety having from 4 to 12 carbon atoms. It is further disclosed in WO 97/23281 that (b) can be an anionic surfactant such as alkyl and alkyl ether sulfates and sulfonates, alkylaryl and alkylaryl ether sulfates and sulfonates, and further discloses that (b) can be illustrated by ammonium or sodium 2-ethylhexyl sulfate or sulfonate, sodium octyl sulfate and sodium mono- or di-dodecyl diphenyl oxide disulfonate. WO 97/23281 further discloses that the surfactant blend is especially useful in agricultural applications as an adjuvant for the delivery of agricultural active ingredients such as fertilizers, micronutrients, biologicals, pesticides, herbicides, fungicides and growth regulators to treatment sites. However, nowhere in WO 97/23281 is a surfactant blend containing lower than 70% by weight of organosilicone compound and higher than 30% by weight of the non-silicone containing surfactant disclosed or suggested.

Our invention provides a surfactant blend comprising 5 to 55% by weight of an organosilicone surfactant and 45 to 95% by weight of an alkyl diphenyloxide sulfonate surfactant. The surfactant blends of this invention provide enhanced performance of certain herbicides such as glyphosate and glufosinate. Benefits include rainfastness and control of difficult weeds such as giant foxtail and velvetleaf beyond what can be achieved with conventional surfactants.

Our surfactant blend comprises (a) 5 to 55% by weight of an organosilicone surfactant having the formula R₃SiO(R₂SiO)ₓ(RR¹SiO)_{y}SiR₃ wherein R is a monovalent hydrocarbon group, R¹ is a polyoxyalkylene group -R²(OC₂H₄)ₐOR³ or -R²(OC₂H₄)ₐ(OC₃H₆)_{b}OR³ wherein R² is a divalent hydrocarbon group, R³ is selected from a hydrogen atom, an alkyl group, an aryl group, an aralkyl group and an acyl group, a has a value of 4 to 15, b has a value of 1 to 5, x has a value of 0 to 3 and y has a value of 1 to 3; and (b) 45 to 95% by weight of an alkyl diphenyloxide sulfonate surfactant.

In the above formula for Component (a), R is a monovalent hydrocarbon group exemplified by alkyl groups such as methyl, ethyl, propyl, butyl, hexyl, octyl and decyl, cycloaliphatic groups such as cyclohexyl, aryl groups such as phenyl, tolyl and xylyl, and aralkyl groups such as benzyl and phenylethyl. Preferably, R is methyl or phenyl, and it is especially preferred that R is methyl. The several R radicals can be identical or different, as desired.

The group R² is a divalent hydrocarbon group which is exemplified by alkylene groups exemplified by methylene, ethylene, trimethylene, tetramethylene, 2-methyltrimethylene, pentamethylene, hexamethylene, 3-ethyl-hexamethylene, octamethylene, decamethylene, dodecamethylene and octadecamethylene, cycloalkylene radicals such as cyclohexylene, arylene radicals such as phenylene and benzylene, and oxygen-containing divalent hydrocarbon groups such as -CH₂OCH₂-, -CH₂CH₂CH₂OCH₂-, -CH₂CH₂OCH₂CH₂-, -(C=O)OCH₂CH₂O(O=C)-, -CH₂CH₂OCH(CH₃)CH₂ - and -CH₂OCH₂CH₂OCH₂CH₂ -. Preferably R² is selected from ethylene, trimethylene, 2-methyltrimethylene and tetramethylene.

The group R³ can be a hydrogen atom, an alkyl group, an aryl group, an aralkyl group or an acyl group. The alkyl groups are exemplified by methyl, ethyl, propyl, butyl, hexyl, octyl and decyl. The aryl groups are exemplified by phenyl, tolyl and xylyl. The aralkyl groups are exemplified by benzyl, 2-phenylethyl and 3-phenylbutyl. The acyl group can have from 1 to 20 carbon atoms and include groups such as acetyl, propionyl, butyryl, isobutyryl, lauroyl, myristoyl and stearoyl 3-carboxypentadecanoyl. Preferably the acyl group is a group having the formula -C=OR⁴ wherein R⁴ denotes a monovalent hydrocarbon group. The monovalent hydrocarbon groups of R⁴ are as delineated above for R. It is preferred that R⁴ is a lower alkyl group such as methyl, ethyl or butyl. Preferably R³ is selected from hydrogen, methyl and -C=OCH₃.

In the above formula for Component (a), preferably a has an average value of 7, b has a value of 0, x has a value of 0 and y has a value of 1.

Component (a) is present in the surfactant blend in an amount of from 5 to 55% by weight, preferably component (a) is present in the surfactant blend in an amount of from 20 to 55% by weight.

The alkyl diphenyloxide sulfonate surfactant of Component (b) is exemplified by a compound having the formula: 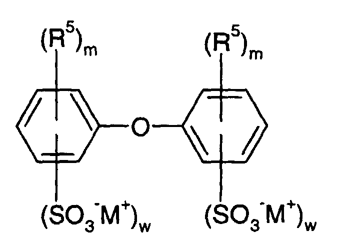 wherein each R⁵ is independently selected from saturated alkyl radicals, substituted saturated alkyl radical, unsaturated alkyl radicals and substituted unsaturated alkyl radicals, each m is independently 0 or 1, each M+ is independently selected from hydrogen, an alkali metal, an alkaline earth metal, ammonium and substituted ammonium, and each w is independently 0 or 1, with the proviso that component (b) contains at least one sulfonate group. Component (b) can also be a mixture of two or more different alkyl diphenyloxide sulfonate surfactants which are described by the above formula.

Each R⁵ group can be independently an alkyl group having up to 24 carbon atoms, preferably 6 to 16 carbon atoms, and most preferably 6 to 10 carbon atoms, with 10 carbon atoms being especially preferred. The alkyl groups can be linear, branched or cyclic, with linear or branched groups being preferred. Preferably R⁵ is an alkyl group, each m is independently 0 or 1, and each w is independently 0 or 1, with the proviso that component (b) contains at least one sulfonate group.

The ammonium cations have the formula [(R')₃NH]+ wherein each R' is independently hydrogen, a C₁-C₄ alkyl or a C₁-C₄ hydroxyalkyl radical. The C₁-C₄ alkyl or hydroxyalkyl radicals are exemplified by methyl, ethyl, propyl, isopropyl, butyl, hydroxymethyl and hydroxyethyl. Typical ammonium cations are exemplified by ammonium (NH₄)+, methylammonium (CH₃NH₃) +, ethylammonium (C₂H₅NH₃)+, dimethylammonium ((CH₃) ₂NH₂)+, methylethylammonium (CH₃NH₂C₂H₅)+, trimethylammonium ((CH₃)₃NH)+ dimethylbutylammonium ((CH₃)₂NHC₄H₉) + hydroxyethylammonium (HOCH₂CH₂NH₃)+ and methylhydroxy-ethylammonium (CH₃NH₂CH₂CH₂OH)+. Preferably, each M+ is selected from hydrogen, sodium, potassium or ammonium.

Alkyl diphenyloxide sulfonates and their methods of preparation are well-known and reference is made thereto for the purposes of this invention. Representative methods of preparation of these sulfonates are disclosed in U.S. Patents 3,264,242, 3,634,272, 3,945,437, 2,990,375 and 5,015,367. Commercial methods of preparation of the alkyl diphenyl oxide sulfonates generally do not produce species which are exclusively monoalkyl, monosulfonate, dialkyl or disulfonate. The commercially available species are predominantly (greater than 85 percent) disulfonates and are a mixture of mono-and di-alkyl with the percentage of dialkylation being 5 to 25 and the percentage of monoalkylation being 75 to 95 percent. Most typically, the commercially available species are 80 percent monoalkyl and 20 percent dialkyl.

Commercially available materials suitable as Component (b) are exemplified by sodium (linear hexyl) diphenyloxide sulfonate, designated as ADPOS-C6L herein, at a concentration of 45%, a liquid anionic surfactant (available as DOWFAX™ Hydrotrope from The Dow Chemical Company, Midland, MI); sodium (linear octyl) diphenyloxide sulfonate, designated as ADPOS-C8L herein, at a concentration of 45%, a liquid anionic surfactant (experimental surfactant XU40580.00 from The Dow Chemical Company, Midland, MI); sodium (linear decyl) diphenyloxide sulfonate, designated as ADPOS- C10L herein, at a concentration of 45%, a liquid anionic surfactant (available as DOWFAX™ Ag from The Dow Chemical Company, Midland, MI); sodium (linear decyl) diphenyloxide sulfonate, at a concentration of 92%, a powdered anionic surfactant having an HLB of 17.8 (available as DOWFAX™ Ag-D from The Dow Chemical Company, Midland, MI); sodium (linear dodecyl) diphenyloxide sulfonate, designated as ADPOS-C12L herein, at a concentration of 45%, a liquid anionic surfactant having an HLB of 16.7 (available as experimental surfactant XUS8174.00 from The Dow Chemical Company, Midland, MI); sodium (branched dodecyl) diphenyloxide sulfonate, designated as ADPOS-C12Br herein, at a concentration of 45%, a liquid anionic surfactant having an HLB of 16.7 (available as DOWFAX™ 2A1 from The Dow Chemical Company, Midland, MI); sodium (branched dodecyl) diphenyloxide sulfonate, at a concentration of 92%, a powdered anionic surfactant having an HLB of 16.7 (available as DOWFAX™ 2A1-D from The Dow Chemical Company, Midland, MI); sodium (linear hexadecyl) diphenyloxide sulfonate, designated as ADPOS-C16L herein, at a concentration of 35%, a liquid anionic surfactant having an HLB of 14.4 (available as DOWFAX™ Detergent from The Dow Chemical Company, Midland, MI); and sodium (linear hexadecyl) diphenyloxide sulfonate, at a concentration of 92%, a powdered anionic surfactant having an HLB of 14.4 (available as DOWFAX™ Detergent-D from The Dow Chemical Company, Midland, MI).

Component (b) is present in the surfactant blend in an amount of from 45 to 95% by weight, preferably component (b) is present in the surfactant blend in an amount of from 45 to 80% by weight.

The surfactant blend of this invention is prepared by combining the low molecular weight organosilicone surfactant (a) and the alkyl diphenyloxide sulfonate surfactant (b). The order of addition is not critical, and hence, they can be charged in any order to a vessel and mixed by stirring, shaking, or by any other means known to those skilled in the art. The two components can be mixed neat or blended as a solution, dispersion, or emulsion. Components (a) and (b) can also be co-absorbed onto a solid support, such as a clay or a zeolite. Preferably a homogeneous mixture is formed. The solution, dispersion, or emulsion of the components can be aqueous or non-aqueous. If a non-aqueous solution, dispersion or emulsion is desired, the organosilicone surfactant and the alkyl diphenyloxide sulfonate surfactant may be placed in a non-aqueous solvent exemplified by isopropanol or glycol ethers or in any liquid in which they are miscible. When other additives such as a solvent, for example, are employed in the blend, such additives are generally present in amounts up to 20% by weight of the blend, preferably up to 10% by weight of the blend.

This invention further relates to a method of treating a plant comprising applying to a plant surface an agriculturally active composition comprising (a) an agriculturally active ingredient, and (b) a surfactant blend comprising (i) 5 to 55% by weight of an organosilicone surfactant having the formula R₃SiO(R₂SiO)ₓ(RR¹SiO)_{y}SiR₃ wherein R is a monovalent hydrocarbon group, R¹ is a polyoxyalkylene -R²(OC₂H₄)ₐOR³ or R²(OC₂H₄)ₐ(OC₃H₆)_{b}OR³ wherein R² is a divalent hydrocarbon group, R³ is selected from a hydrogen atom, an alkyl group, an aryl group, an aralkyl group and an acyl group, a has a value of 4 to 15, b has a value of 1 to 5, x has a value of 0 to 3 and y has a value of 1 to 3; and (ii) 45 to 95% by weight of an alkyl diphenyloxide sulfonate surfactant.

Component (a), the agriculturally active ingredient is exemplified by fertilizers, micronutrients, biologicals, pesticides, insecticides, herbicides, fungicides, growth regulators to treatment sites, and other agricultural agents whose efficacy or performance may be enhanced by the use of such a surfactant blend. Preferably, the agriculturally active ingredient is a herbicide. The herbicide is preferably a formulation containing glyphosate(isopropylamine salt of N-(phosphonomethyl)glycine), glyphosate-trimesium (trimethylsulfonium salt of N-(phosphonomethyl)glycine), or glufosinate-ammonium (butanoic acid, 2-amino-4-(hydroxymethylphosphinyl)-, monoammonium salt).

Typically for an agriculturally active composition of this invention, the concentration of agriculturally active ingredient will be present in an amount of from 2 to 75% by weight and preferably from 4 to 40% by weight based on the weight of the total composition.

In the final application solution of the agriculturally active composition in, for example, a spray solution applied to plants, the concentration of agriculturally active ingredient will be present in an amount from 0.0001% to 20% by weight, and preferably from 0.05% to 10% by weight, and most preferably from 0.1% to 5% by weight of the final application solution.

Component (b), the surfactant blend, is as described above, including preferred embodiments and amounts thereof. The surfactant blend of this invention can be employed as a part of the formulation of the agriculturally active composition or can be added separately to a tank mix. The surfactant blend may be added, or the components of the surfactant blend may be added individually to the tank mix. The surfactant blend of this invention is incorporated into the agriculturally active composition at a concentration that will enhance the performance of the composition. Generally, the amount of the surfactant blend will be sufficient to deliver 0.01 to 0.5% volume/volume in the composition containing the agriculturally active ingredient as applied. Preferably, the amount of surfactant blend employed in the agriculturally active composition as applied ranges from 0.05% to 0.30% volume/volume.

The components employed in the composition to be applied to the plant surface can be combined in any order. For example, the formulation may be prepared by starting with the agriculturally active ingredient and adding the various components in any order. For example, the surfactant blend can be added to the agriculturally active ingredient or the ingredients comprising the surfactant blend can be added individually in any order to the agriculturally active ingredient.

The agriculturally active composition can further comprise water. Water can be employed in any amount desired. The amount of water which is employed to prepare the concentrate or final application concentration, as in a spray, is adjusted as necessary. The concentrate and/or final formulation may also be a dry formulation.

In addition to the above mentioned ingredients, the agriculturally active compositions of this invention can further comprise other agricultural adjuvants commonly employed in the art. Examples of such adjuvants include drift control agents such as LO-DRIFT®, defoaming agents such as D-FOAMER®, compatibility agents such as E-Z MIX®, and other adjuvants well known in the agricultural arts. It is understood by those skilled in the art that the amount of these adjuvants in the agriculturally active composition can vary widely. Optimization of effective amounts of commonly employed adjuvants can be readily determined by routine experimentation.

The agriculturally active composition may be dispersed in water and sprayed onto plants or the surfactant blend of this invention may be added directly to a water solution or dispersion of agriculturally active ingredient.

This invention further relates to an agriculturally active composition comprising (a) an agriculturally active ingredient, and (b) a surfactant blend comprising (i) 5 to 55% by weight of an organo-silicone surfactant having the formula R₃SiO(R₂SiO)ₓ(RR¹SiO)_{y}SiR₃ wherein R is a monovalent hydrocarbon group, R¹ is a polyoxyalkylene group -R²(OC₂H₄)ₐOR³ or R²(OC₂H₄)ₐ(OC₃H₆)_{b}OR³ wherein R² is a divalent hydrocarbon group, R³ is selected from a hydrogen atom, an alkyl group, an aryl group, an aralkyl group and an acyl group, a has a value of 4 to 15, b has a value of 1 to 5, x has a value of 0 to 3 and y has a value of 1 to 3; and (ii) 45 to 95% by weight of an alkyl diphenyloxide sulfonate surfactant.

Components (a) and (b) are as described hereinabove including preferred embodiments and amounts thereof. The agriculturally active composition can also further comprise any of the optional ingredients described hereinabove.

It is a further benefit of this invention that current organosilicone surfactants are used as an adjuvants with certain herbicides to improve control of difficult to control weeds such as velvetleaf and to provide rainfastness but their cost is very high. In contrast the surfactant blends of this invention provide excellent weed control and significant rainfastness at a much reduced cost.

### Example 1

Solutions were prepared containing 0.15% total surfactant and applied to polyester film and paraffin wax. The droplet spread diameter vs. distilled water was determined as follows: a 50 microliter drop of aqueous surfactant blend solution or of distilled water is placed from a syringe onto either a flat sheet polyester or paraffin wax film. After five minutes, the drop diameter is measured across two normal axes. Surfactant solution drops are run in triplicate and all diameters are averaged (n=6). Spread factors are calculated by normalizing the drop spread of a surfactant blend to that of distilled water. The results are described in Table.

The surfactant was a blend of a low molecular weight organosilicone surfactant having the average formula Ne₃SiO(MeR¹SiO)SiMe₃, wherein R¹ denotes - (CH₂)₃(OC₂H₄)₇OCH₃ (Organosilicone Surfactant 1) and various alkyl diphenyloxide sulfonate (ADPOS) surfactants. The ADPOS surfactants used in the examples were as follows: ADPOS-C6L denotes DOWFAX™ Hydrotrope, ADPOS- C8L denotes XU40580.00, ADPOS-C10L denotes DOWFAX™ Ag from The Dow Chemical Company, Midland, MI), ADPOS-C12L denotes XUS8174.00, ADPOS-C12Br denotes DOWFAX™ 2A1 and ADPOS-C16L denotes DOWFAX™ Detergent all described hereinabove.

**Table 1**

| Drop Spread of Aqueous Surfactant Solution (0.15 wt% total surfactant concentration) (Average Spread Diameters Normalized by Average Spread of Water, n=6) | | | | | | | |
|---|---|---|---|---|---|---|---|
| | | Replacement of Organosilicone Surfactant 1 by ADPOS (% by wt) | | | | | |
| Surface | ADPOS | 0 | 10 | 25 | 50 | 75 | 90 |
| Polyester | C6L | 10.2 | 11.7 | 14.1 | 10.8 | 3.7 | 1.9 |
| | C6L | 10.8 | 11.7 | 14.2 | 10.9 | 3.7 | 1.8 |
| | C8L | 10.2 | 13.9 | 2.7 | 1.3 | 1 | 1 |
| | C10L | 10.2 | 13.1 | 12 | 3.3 | 1.8 | 1.3 |
| | C10L | 10.8 | 12.9 | 11.9 | 3.3 | 1.8 | 1.3 |
| Paraffin Wax | C6L | 8.9 | 7.1 | 9 | 3.5 | 2 | 1.8 |
| | C6L | 8.7 | 7.2 | 9.4 | 3.1 | 1.9 | 1.8 |
| | C8L | 8.7 | 11.6 | 2.6 | 1.2 | 1 | 1 |
| | C10L | 8.9 | 9.1 | 3.1 | 2.2 | 1.8 | 1.4 |
| | C10L | 8.7 | 9.1 | 3 | 2.2 | 1.8 | 1.4 |

The blends show the greatest spreading on hydrophobic surfaces when the organosilicone surfactant concentration is greater than 60%. This would indicate that organosilicone surfactant concentrations of less than 60% would result in herbicide compositions having poor efficacy. However, Examples 4-7 show that herbicide performance is unexpectedly enhanced at organosilicone surfactant concentrations of 50% and 25% respectively. Thus, it is apparent that materials having good wetting performance does not necessarily indicate that the materials will have superior agricultural adjuvancy.

### Example 2

Droplet spread in millimeters diameter was determined for surfactant blends containing the low molecular weight organosilicone surfactant of Example 1 and various ADPOS surfactants. The results are shown in Table 2 below.

**Table 2**

| Drop Spread of Aqueous Surfactant Solution (0.10 wt% total surfactant concentration) | | | | | |
|---|---|---|---|---|---|
| | | Replacement of Organosilicone Surfactant 1 by ADPOS (% by wt) | | | |
| Surface | ADPOS | 20 | 40 | 60 | 80 |
| Paraffin Wax | C6L | 50 | 22 | 22 | 16 |
| | C8L | 40 | 20 | 16 | 10 |
| | C10L | 12 | 13 | 11 | 10 |
| | C12L | 12 | 10 | 10 | 8 |
| | C12Br | 9 | 8 | 8 | 8 |
| | C16L | 8 | 8 | 8 | 8 |

The smallest alkyl groups yielded the greatest spread. This indicates that the ADPOS surfactants having the smallest alkyl groups produced the greatest herbicide enhancement. Examples 4-7 show unexpectedly that greater enhancement was found with ADPOS surfactants having larger alkyl groups. Thus, materials having good wetting performance do not necessarily have superior agricultural adjuvancy.

### Example 3

Two surfactant blends were prepared. Surfactant Blend 1 contained 50% by weight of a low molecular weight organosilicone surfactant having the average formula Me₃SiO(MeR¹SiO)SiMe₃, wherein R¹ denotes -(CH₂)₃(OC₂H₄)₇OC=OCH₃ (Organosilicone Surfactant 2) and 50% by weight of ADPOS surfactant ADPOS-C10L. Surfactant Blend 2 contained 50% by weight of Organosilicone Surfactant 2 and 50% by weight of ADPOS-C6L. At various time intervals, dilutions were made in distilled water at various concentrations and then the surface tension of the solution was determined using the de Nouy ring method (ASTM Method D 1131). The results are shown in Tables 3 and 4.

**Table 3**

| Surfactant Blend 1 Surface Tension vs. Time | | | | |
|---|---|---|---|---|
| Concentration in water, % | Surface Tension, dyne/cm (m·N/m) | | | |
| | Initial | 24 hrs. | 72 hrs. | 30 days |
| 0 | 70.2 | 70.2 | 70.2 | 70.2 |
| 0.0001 | 64.75 | 64.55 | 56.85 | 68.36 |
| 0.001 | 40.55 | 38.7 | 40.75 | 42.9 |
| 0.01 | 26.2 | 25.4 | 26 | 26.4 |
| 0.1 | 23.7 | 23.2 | 22.9 | 23.4 |
| 1 | 24.4 | 24.1 | 24.15 | 24.15 |

**Table 4**

| Surfactant Blend 2 Surface Tension vs. Time | | | | |
|---|---|---|---|---|
| Concentration in water, % | Surface Tension, dyne/cm (m·N/m) | | | |
| | Initial | 24 hrs. | 72 hrs. | 30 days |
| 0 | 70.2 | 70.2 | 70.2 | 70.2 |
| 0.0001 | 67.35 | 57.9 | 55.9 | 68.9 |
| 0.001 | 41.46 | 42.3 | 43.15 | 42.9 |
| 0.01 | 24.65 | 25.5 | 26 | 26.4 |
| 0.1 | 22.15 | 22.6 | 22.65 | 26.4 |
| 1 | 22.36 | 22.8 | 22.4 | 24.15 |

### Example 4

Accord® herbicide (a formulation containing glyphosate sold by Monsanto Company) was applied at 0.1 lb. ai/acre (112 g. active ingredient per hectane or 112 g/ha) to greenhouse grown weeds at the 3-5 leaf growth stage. The Accord® was applied at a spray volume of 25 gallons/acre (0.234 m³/ha). The adjuvants (surfactants) were mixed in the spray mixture at a rate of 0.25% v/v. Ammonium sulfate was added to all spray mixes at 2% v/v. The weeds were observed for visual injury 14 days after treatment; 0 = no injury, 100 = complete necrosis. Weed type and surfactant type are reported in Table 5. Surfactant Blend 3 contained 25% by weight of Organosilicone Surfactant 2 and 75% by weight of ADPOS surfactant ADPOS-C10L. Surfactant Blend 4 contained 25% by weight of Organosilicone Surfactant 2 and 75% by weight of ADPOS-C6L.

**Table 5**

| Glyphosate with: | Velvetleaf | Common Lambsquarters | Giant Foxtail |
|---|---|---|---|
| Untreated | 0 | 0 | 0 |
| No adjuvant | 32 | 13 | 17 |
| Conventional Nonionic Surfactant | 69 | 39 | 19 |
| Organosilicone Surfactant 2 | 81 | 34 | 59 |
| ADPOS-C10L | 75 | 61 | 69 |
| ADPOS-C6L | 69 | 67 | 67 |
| Surfactant Blend 3 | 79 | 66 | 62 |
| Surfactant Blend 4 | 73 | 69 | 66 |

A surfactant blend of Organosilicone Surfactant 2 and ADPODS surfactants used with a glyphosate herbicide provide control of broader range of broadleaf and grass weeds than when each surfactant is used alone. For example, Organosilicone Surfactant 2 is an exceptional adjuvant for control of velvetleaf (broadleaf), while the ADPOS surfactants provide excellent results on common lambsquarters (broadleaf) and giant foxtail (grass). The blend of the two produced good results on all weed species. The data shown here were generated using very low rates of glyphosate to accentuate the differences between the different treatments.

### Example 5

The procedure according to Example 4 was repeated except that Liberty® herbicide (a formulation containing glufosinate-ammonium sold by AgrEvo USA Co.) was applied at 0.15 lb. ai/acre (168 g/ha), all other conditions remained the same. The results are reported in Table 6.

**Table 6**

| Glufosinate with: | Velvetleaf | Common Lambsquarters | Giant Foxtail |
|---|---|---|---|
| Untreated | 0 | 0 | 0 |
| No adjuvant | 29 | 32 | 22 |
| Conventional Nonionic Surfactant | 49 | 58 | 30 |
| Organosilicone Surfactant 2 | 80 | 30 | 26 |
| ADPOS-C10L | 49 | 73 | 63 |
| ADPOS-C6L | 41 | 66 | 51 |
| Surfactant Blend 3 | 76 | 63 | 44 |
| Surfactant Blend 4 | 70 | 76 | 67 |

### Example 6

Simulated rainfall was applied 1 hour after herbicide treatments to simulate a sudden rain that might wash off a herbicide. Roundup® Ultra herbicide (a formulation containing glyphosate and a surfactant based on tallowamine ethoxylate sold by Monsanto Company) was included in this study as the premier glyphosate formulation that provides excellent weed control with good rainfastness. Accord® was applied at 0.1 lb. ai/acre (112 g/ha) to greenhouse grown weeds at the 5 leaf growth stage. The Accord® was applied at a spray volume of 25 gallons/acre (.234 m³/ha). The adjuvants were mixed in the spray mixture at a rate of 0.25 v/v. Ammonium sulfate (AMS) was added to all spray mixes at 2% v/v. One inch of simulated rainfall was applied 1 hour after treatments. The weeds were observed for visual injury 14 days after treatment; 0 = no injury, 100 = complete necrosis. The results are shown in Table 7. In Table 7, L-77 is L-77 Spreader (a conventional nonionic surfactant from Loveland Industries) and Surfactant Blend 5 contained 50% by weight of Organosilicone Surfactant 2 and 50% by weight of ADPOS-C8L.

**Table 7**

| | Velvetleaf | | Giant Foxtail | | Common Lambsquarters | |
|---|---|---|---|---|---|---|
| Adjuvant | No rain | Rain | No rain | Rain | No rain | Rain |
| No treatment | 0 | 0 | 0 | 0 | 0 | 0 |
| Roundup® Ultra | 78 | 24 | 79 | 34 | 52 | 3 |
| AMS only | 73 | 0 | 40 | 0 | 24 | 0 |
| L-77 | 62 | 0 | 59 | 3 | 29 | 0 |
| Organosilicone Surfactant 2 | 71 | 64 | 59 | 33 | 21 | 11 |
| ADPOS-C10L | 78 | 0 | 96 | 40 | 63 | 5 |
| ADPOS-C6L | 66 | 0 | 91 | 36 | 59 | 15 |
| ADPOS-C8L | 78 | 0 | 97 | 35 | 63 | 10 |
| Surfactant Blend 1 | 76 | 49 | 99 | 69 | 46 | 17 |
| Surfactant Blend 2 | 65 | 56 | 81 | 34 | 33 | 13 |
| Surfactant Blend 5 | 74 | 64 | 100 | 64 | 40 | 15 |

The data shown in Table 7 demonstrates that the surfactant blends of this invention provide rainfastness on all weed species.

### Example 7

Mixtures of 50% by weight of Organosilicone Surfactant 2 (denoted OS 2 in Table 8 below) and ADPOS surfactants were tank mixed with Accord® herbicide and applied in the field to Roundup® Ready soybeans, soybeans that are genetically engineered to be resistant to injury from glyphosate herbicides. The Accord® was applied at a rate of 0.40 and 0.75 quarts material/acre (9.36 x 10⁻⁴ m³/ha and 1.75 x 10⁻³ m³/ha, respectively) to the soybeans at the 5 leaf stage. Organosilicone Surfactant 2, ADPOS-C10L and ADPOS-C8L were applied at the rate of 0.25% v/v in the spray mixture. Fifty/fifty mixtures of Organosilicone Surfactant 2 and ADPOS surfactants were also applied at 0.25%. L-77 Spreader was included for comparison. Roundup® Ultra herbicide was used as a "benchmark". "Ammonium sulfate was included in all tank-mixes at a rate of 3.0 quarts material/acre (7.02 x 10⁻³ m³/ha).

The soybeans and weeds were observed for injury at one-week intervals. The soybeans exhibited slight injury after 1 week (1% to 6% phytotoxicity), but they had recovered completely in 2-4 weeks. On the other hand, excellent control was achieved with all weed species. The results are shown in Table 8.

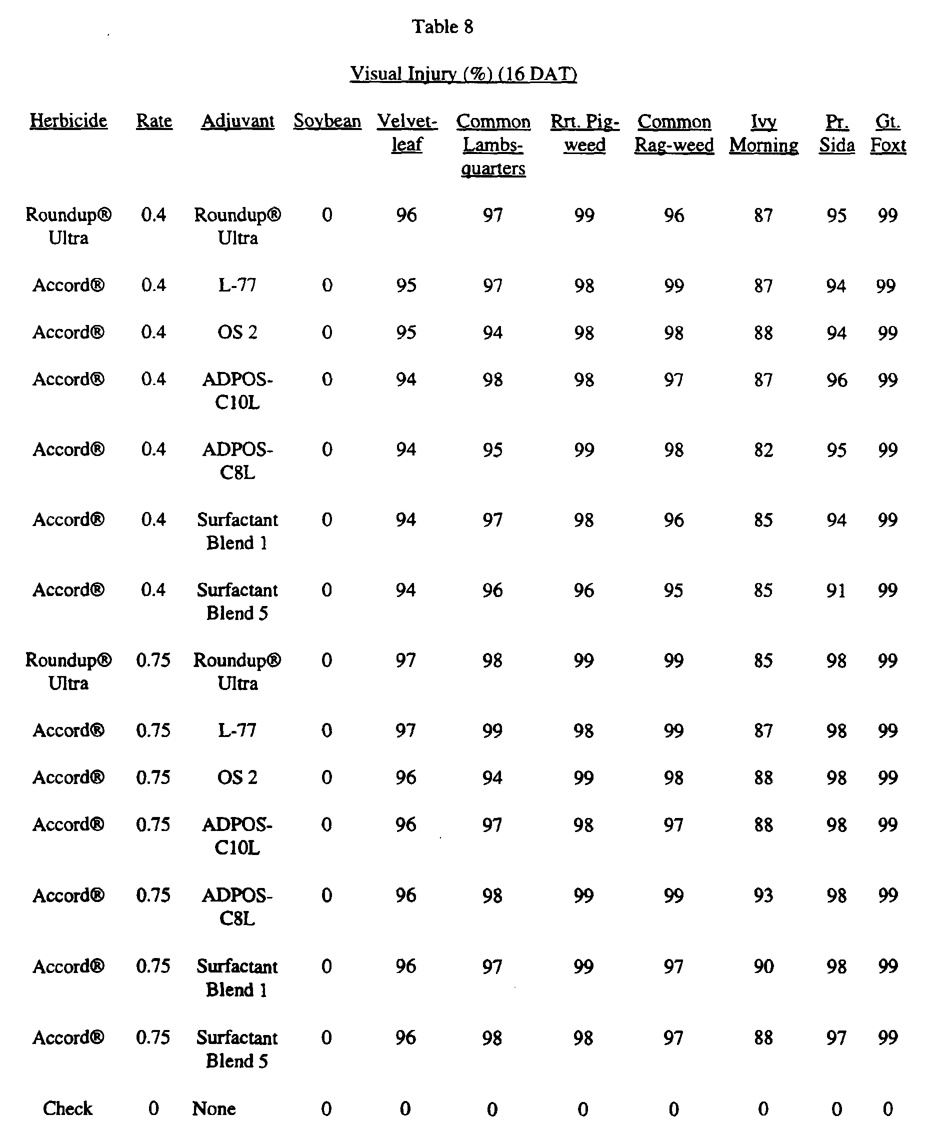

## Claims

1. A surfactant blend comprising:
(a) 5 to 55% by weight of an organosilicone surfactant having the formula R₃SiO(R₂SiO)_{X}(RR¹SiO)_{y}SiR₃ wherein R is a monovalent hydrocarbon group, R¹ is a polyoxyalkylene group R²(OC₂H₄)ₐOR³ or -R²(OC₂H4)ₐ(OC₃H₆)_{b}OR³ wherein R² is a divalent hydrocarbon group, R³ is a hydrogen atom, an alkyl group, an aryl group, an aralkyl group or an acyl group, a has a value of 4 to 15, b has a value of 1 to 5, x has a value of 0 to 3 and y has a value of 1 to 3; and
(b) 45 to 95% by weight of an alkyl diphenyloxide sulfonate surfactant.

2. A surfactant blend according to claim 1 wherein R is methyl, R² is ethylene, trimethylene, 2-methyltrimethylene and tetramethylene, R³ is hydrogen, methyl and -C=OCH₃.

3. A surfactant blend according to claims 1 or 2 wherein a has an average value of 7, b has a value of 0, x has a value of 0 and y has a value of 1.

4. A surfactant blend according to claim 1 wherein the alkyl diphenyloxide sulfonate surfactant is a compound having the formula: 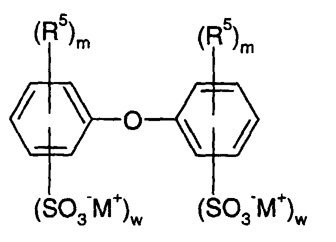 wherein each R⁵ is independently selected from saturated alkyl radicals, substituted saturated alkyl radical, unsaturated alkyl radicals and substituted unsaturated alkyl radicals, each m is independently 0 or 1, each M+ is hydrogen, an alkali metal, an alkaline earth metal, ammonium and substituted ammonium and each w is independently 0 or 1, with the proviso that component (b) contains at least one sulfonate group.

5. A surfactant blend according to claim 4 wherein R⁵ is an alkyl group having from 6 to 16 carbon atoms, each m is independently 0 or 1, each w is independently 0 or 1 with the proviso that component (b) contains at least one sulfonate group and each M+ is hydrogen, sodium, potassium or ammonium.

6. A surfactant blend according to claim 1 wherein (b) is sodium (linear hexyl) diphenyloxide sulfonate, sodium (linear octyl) diphenyloxide sulfonate, sodium (linear decyl) diphenyloxide sulfonate, sodium (linear dodecyl) diphenyloxide sulfonate, sodium (branched dodecyl) diphenyloxide sulfonate and sodium (linear hexadecyl) diphenyloxide sulfonate.

7. A method of treating a plant comprising applying to a plant surface an agriculturally active composition comprising:
(a) an agriculturally active ingredient; and
(b) a surfactant blend according to claim 1.

8. A method according to claim 7 wherein the herbicide is a formulation comprising glyphosate, a formulation comprising glyphosate-trimesium and a formulation comprising glufosinate-ammonium.

9. A method according to claim 7 wherein the agriculturally active composition further comprises water.

10. A method according to claim 7 wherein the agriculturally active composition further comprises at least one ingredient selected from drift control agents, defoaming agents and compatibility agents.

11. An agriculturally active composition comprising:
(a) an agriculturally active ingredient; and
(b) a surfactant blend according to claim 1.
